# EUROPÄISCHE PATENTANMELDUNG

(11) **EP 3 741 708 A1**
(43) Veröffentlichungstag der Anmeldung: **25.11.2020**
(21) Anmeldenummer: 19175480.3
(22) Anmeldetag: 20.05.2019
(51) Int. Cl.: B65D 65/46, B65D 81/03, B65D 77/04

(54) **VERPACKUNG ZUM VERSCHLIESSEN VON VERPACKUNGSINHALTEN**

(71) Anmelder: Barkinsulation GmbH, 5412 Puch bei Hallein (AT)
(72) Erfinder: LIENBACHER, Bernhard, 5412 Puch bei Hallein (AT)
(74) Vertreter: Stolmár & Partner Patentanwälte PartG mbB

(57) **Zusammenfassung**

Die Erfindung betrifft eine formanpassende Verpackung zum Schutz verschiedener Verpackungsinhalte, die eine innere Kammer aus einem elastischen flexiblen Material zum Umschließen des Verpackungsinhalts und eine äußere Kammer aus einem elastischen flexiblen Material zum Umschließen der inneren Kammer umfasst. Die Erfindung betrifft ferner die Verwendung dieser Verpackung, unter anderem als Verpackung der Verpackungsinhalte zum Transport, zur Aufbewahrung und Lagerung und/oder als Schutzverpackung gegen externe Einflüsse.

## Beschreibung

Die Erfindung betrifft eine formanpassende Verpackung zum Schutz verschiedener Verpackungsinhalte, die eine innere Kammer aus einem elastischen Material zum Umschließen des Verpackungsinhalts und eine äußere Kammer aus einem elastischen Material zum Umschließen der inneren Kammer umfasst. Die Erfindung betrifft ferner die Verwendung dieser Verpackung unter anderem als Verpackung der Verpackungsinhalte zum Transport, zur Aufbewahrung und Lagerung und/oder als Schutzverpackung gegen externe Einflüsse.

Verpackungen zum Verpacken eines Verpackungsinhaltes sind bereits aus dem Stand der Technik bekannt.

DE202018003964 (U1) offenbart beispielsweise eine Verpackung aus einem Flächenzuschnitt zum Verpacken eines Verpackungsguts, wobei Füllmaterial an dem Flächenzuschnitt fixierbar ist.

DE202018003969 (U1) offenbart eine Verpackung mit einem Flächenzuschnitt und einer Fixierlasche zum Verpacken eines Verpackungsguts, die ein sicheres Verpacken eines Verpackungsgutes ohne Füllmaterial ermöglichen und einfach zu entsorgen ist.

DE102016122710 (A1) offenbart eine Verkaufsverpackung mit Seitenwänden, einer Vorderwand und einem Boden, der mit diesen einen Innenraum zur Aufnahme von Waren bildet und einem elastischen Band, das zum Ausüben einer auf die Vorderwand gerichteten Kraft auf die Waren ausgebildet ist. Diese Verkaufsverpackung dient dazu, die Waren während eines Transports zu schützen und die Waren zudem stets so auf die Vorderwand zu ziehen, sodass Waren nach vorne gedrückt werden, wenn von vorn eine Ware entnommen wird. Zudem ist sie einfach herzustellen und kommt mit besonders wenig Material aus.

DE202018000091 (U1) offenbart eine stabile Tragepackung aus einem Kartonzuschnitt für mehrere Behälter, insbesondere für mehrere Getränke- oder Bierflaschen in Reihenanordnung, die einfach zu handhaben und kostengünstig herzustellen ist.

Das Prinzip der Nachhaltigkeit, d.h. Ressourcen insbesondere dann zu schützen, wenn diese nicht erneuerbar sind, ist seit vielen Jahren ein Leitbild für politisches, wirtschaftliches und ökologisches Handeln. Demnach ist Nachhaltigkeit in Bezug auf Verpackungsmaterialien in den letzten Jahren auch in der Verpackungsindustrie zu einem wichtigen Punkt geworden. Umweltverträglichkeit und Mehrzwecktauglichkeit der verwendeten Verpackungen werden daher in Zukunft vermutlich mitentscheidende Faktoren bei einer Kaufentscheidung des Endverbrauchers sein.

Aufgabe der vorliegenden Erfindung ist es daher, eine Verpackung bereitzustellen, die einen Verpackungsinhalt gegen externe Einflüsse schützt und zudem umweltverträglich und nachhaltig ist.

Die erfindungsgemäße Verpackung umfasst dabei eine innere Kammer aus einem elastischen Material zum Umschließen des Verpackungsinhalts und eine äußere Kammer aus einem elastischen Material zum Umschließen der inneren Kammer.

Die innere Kammer besteht aus einem elastischen Material und ist somit flexibel. Die innere Kammer umschließt den im Innenraum der inneren Kammer eingesetzten Verpackungsinhalt und wird durch Absaugung der Umgebungsluft aus der Verpackung mit einer Absaugevorrichtung an den Verpackungsinhalt angelegt.

Die innere Kammer, die den Verpackungsinhalt umschließt, wird in den Innenraum der äußeren Kammer eingesetzt. Nachfolgend wird die äußere Kammer durch Absaugung der Umgebungsluft aus der Verpackung mit einer Absaugevorrichtung an die innere Kammer angelegt. Dadurch fügt sich die äußere Kammer an den Verpackungsinhalt an, wodurch die Druck- und Stoßfestigkeit des Verpackungsinhaltes erhöht wird.

Die äußere Kammer der erfindungsgemäßen Verpackung umfasst ein Füllmaterial. Basierend auf der Auswahl eines geeigneten Füllmaterials lassen sich spezifische Anforderungen an die Verpackung, wie beispielsweise thermische Isolierfähigkeit und/oder Stoßfestigkeit, verbessern.

Bei dem Füllmaterial der äußeren Kammer gemäß der vorliegenden Erfindung handelt es sich um Granulat und/oder Granulat-ähnliches Füllmaterial, um kompostierbares und/oder recycelbares Füllmaterial und/oder um ein Füllmaterial aus nachhaltiger Produktion. Bevorzugt handelt es sich bei dem Füllmaterial der äußeren Kammer um ein Füllmaterial aus Baumrinde. Vorzugsweise handelt es sich um Baumrinde aus einem Weichholz oder aus Kombinationen aus Weichhölzern.

Der Begriff "Weichholz" bezeichnet im Sinne der vorliegenden Erfindung ein leichtes Holz, d.h. ein Holz mit einer Darrdichte unter 0,55 g/cm. Die "Darrdichte" (pdarr) bezeichnet die durchschnittliche Rohdichte von trockenem Holz, das heißt die Rohdichte bei 0 % Holzfeuchte. Ist diese Definition für die vorliegende Erfindung zutreffend? Weichhölzer weisen im Vergleich zu Hartholz (d.h. Holz mit einer Darrdichte über 0,55 g/cm³) eine poröse Struktur und eine niedrigere Dichte auf, wodurch sich eine erhöhte Wärmekapazität ergibt. Typische Beispiele für Weichhölzer sind Lärche, Fichte, Tanne, Kiefer, Buche, Weide, Pappel, Linde, Birke, Zitterpappel, Faulbaum. Welche weiteren Weichhölzer sollen in die Auflistung aufgenommen bzw. welche gestrichen werden? Die Baumrinde besteht, wie Holz, aus den Hauptkomponenten Cellulose, Hemicellulose, und Lignin, wobei der Anteil an Baumrinde an einem Stamm je nach Baumart zwischen 8 und 20 % variiert. Bedingt durch die inhomogene anatomische Struktur und durch die ständige Veränderung der Baumrinde über Jahre hinweg, um den Baum vor Witterungseinflüssen, UV-Strahlung, biologischen Umwelteinflüssen wie Angriffen von Kleintieren oder gegen Bakterien, Pilze und andere parasitäre Pflanzen sowie mechanische Verletzungen zu schützen, variieren die Eigenschaften der Baumrinde. Baumrinde weist kurzgewachsene Zellen mit einem relativ geringen Cellulosegehalt auf, wodurch ihre mechanischen Eigenschaften im Vergleich zu Holz relativ schlecht sind. Aufgrund des geringen Cellulosegehalts und des hohen Ligningehalts der Baumrinde ist ihre Dichte gering.

Baumrinde ist ein Nebenprodukt der Holzverarbeitungsproduktion in der Sägewerkindustrie und der Hackschnitzelproduktion der Papier- und Holzbearbeitungsindustrie. Im Rahmen der Holzverarbeitung sind in Deutschland jährlich etwa 1-1,5 Mio. m³ Baumrinde und in Österreich jährlich ca. 2,8 Mio. m³ Baumrinde verfügbar. Getrocknete Baumrinde hat gute Dämmeigenschaften und einen im Vergleich zu Holz erhöhten Brandwiderstand.

Die Baumrinde kann in Form von Partikeln, als Pulver, als Granulat, in Granulat-ähnlicher Form oder in Kombinationen davon in der äußeren Kammer der Verpackung enthalten sein.

Die erfindungsgemäße äußere Kammer der Verpackung ist in Einzelsegmente unterteilt, wodurch das Füllmaterial über den gesamten Bereich der äußeren Kammer gleichmäßig verteilt vorliegt und sich somit optimal an die Form des Verpackungsinhaltes anpassen kann.

In einer besonders bevorzugten Ausführungsform weist die äußere Kammer ein Wabenmuster auf. Eine Wabe ist vorzugsweise eine Zelle eines Musters aus flächig angeordneten sechseckigen Hohlräumen.

Das Füllmaterial liegt bevorzugt in diesen Einzelsegmenten der äußeren Kammer der Verpackung vor.

Die innere und/oder äußere Kammer der erfindungsgemäßen Verpackung besteht vorzugsweise aus einem elastischen Material, das kompostierbar und/oder recycelbar und/oder aus nachhaltiger Produktion ist.

Die Verpackung gemäß der vorliegenden Erfindung umfasst einen Verpackungsinhalt mit gleichen Produkten und/oder voneinander unterscheidbaren Produkten.

Bei der erfindungsgemäßen Verpackung handelt es sich um eine druck-und stoßfeste Verpackung, die zum Schutz zerbrechlicher, Druck-, Stoß- und/oder Kratz-empfindlicher Verpackungsinhalte geeignet ist. Zusätzliches Verpackungsmaterial, wie beispielsweise Luftpolsterfolie oder Styropor, ist daher unnötig, wodurch die Verpackungsgröße, der Materialverbrauch sowie Kosten reduziert und die Umweltverträglichkeit verbessert wird.

Daher ist ein Gegenstand der vorliegenden Erfindung auch die Verwendung der Verpackung als Verpackung zum Transport, Verpackung zur Aufbewahrung und Lagerung, Werbe- und/oder Verkaufsverpackung, Versandverpackung, Aromaschutzverpackung, Thermoverpackung, Isolierverpackung, Schutzverpackung gegen mechanische und/oder thermische Einflüsse, Schutzverpackung für Druck-, Stoß-und/oder Kratz-empfindliche Verpackungsinhalte.

Das am 1. Januar 2019 in Kraft getretene Verpackungsgesetz (VerpackG) fördert eine nachhaltige Verpackungsentsorgung auf Grundlage der Verpflichtung aller Händler in Verkehr gebrachte, mit Ware befüllte und beim Endverbraucher anfallende Verpackungen inklusive Füllmaterial zurückzunehmen und zu verwerten.

Die Verpackung gemäß der vorliegenden Erfindung ermöglicht es auf zusätzliche Umverpackungsmaterialien wie Luftpolsterfolie und/oder Styropor zu verzichten, wodurch die Größe der Verpackung, der Materialverbrauch sowie Kosten reduziert und die Umweltfreundlichkeit verbessert wird.

Die Verpackung gemäß der vorliegenden Erfindung ist daher insbesondere zur Verwendung als Verpackung für Verpackungsinhalte im Versandhandel, insbesondere im Onlinehandel (E-Commerce), geeignet.

Die Verpackung gemäß der vorliegenden Erfindung weißt eine hohe Stoßfestigkeit und/oder Isolierfähigkeit auf. Daher ist die Verwendung der Verpackung als Verpackung für Lebensmittel, Verpackung für Getränke, Verpackung für Blutkonserven und/oder Medikamente, Verpackung für Pharma- und/oder Medizintechnikprodukte besonders bevorzugt.

Die Erfindung wird darüber hinaus durch die folgenden Abbildungen erläutert, die jedoch nicht dazu dienen sollen, den Umfang der Erfindung einzuschränken.

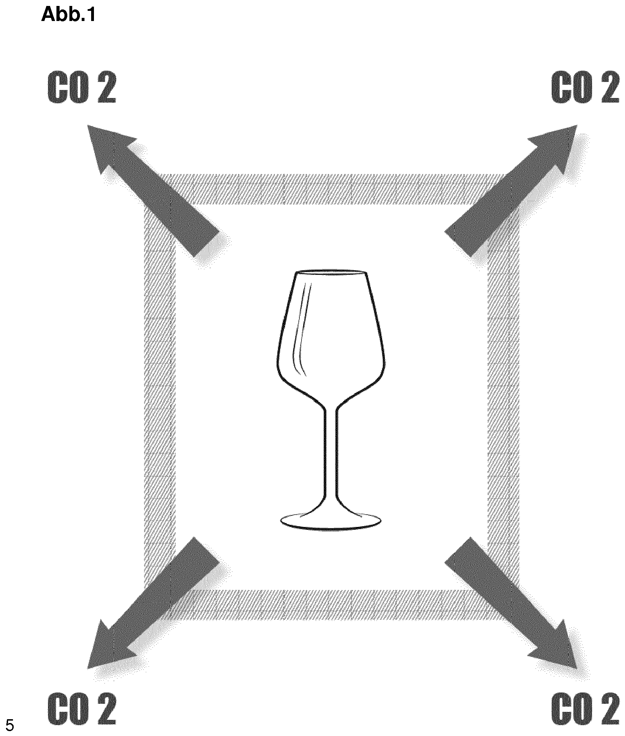

Abb.1 zeigt das Funktionsprinzip der inneren Kammer der erfindungsgemäßen Verpackung. Die innere aus einem elastischen flexiblen Material bestehende Kammer wird durch Absaugung der Umgebungsluft an die Form des Verpackungsinhaltes angelegt.

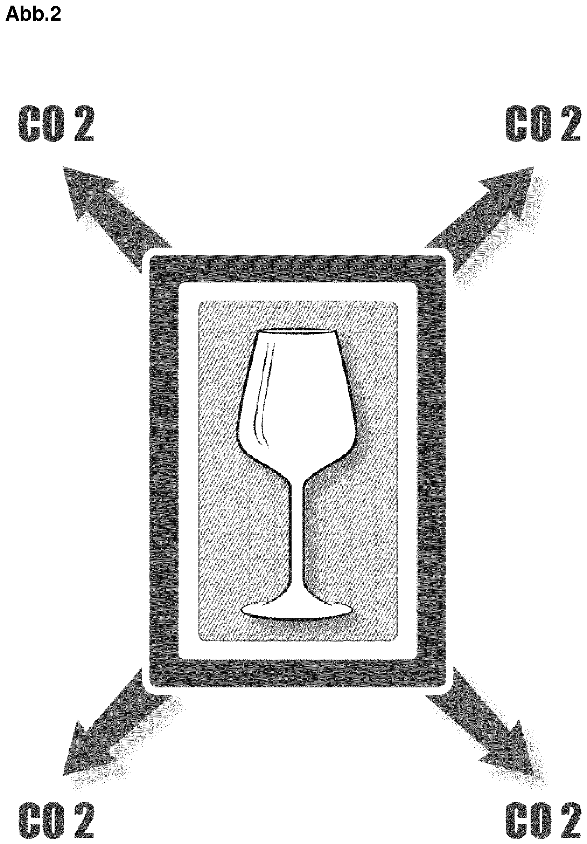

Abb.2 zeigt das Funktionsprinzip der äußeren Kammer der erfindungsgemäßen Verpackung. Die äußere aus einem elastischen flexiblen Material bestehende Kammer wird durch Absaugung der Umgebungsluft an die Form des Verpackungsinhaltes angelegt.

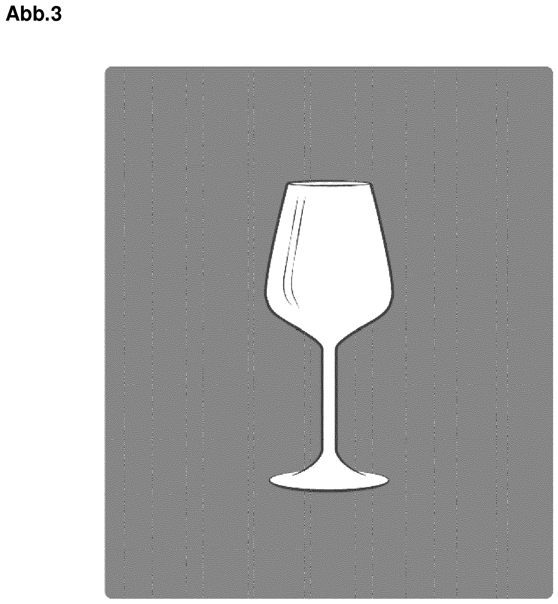

Abb.3 zeigt eine erfindungungsgemäße formanpassende Verpackung zum Schutz verschiedener zerbrechlicher Druck- und Stoßempfindlicher Verpackungsinhalte, wie z.B. des abgebildeten Weinglases. Die innere Kammer aus einem elastischen Material umschließt das Weinglas und die äußere Kammer aus einem elastischen Material umschließt die innere Kammer. Die dargestellte errfindungsgemäße Verpackung kann demnach als Verpackung unterschiedlicher Verpackungsinhalte zum Transport, zur Aufbewahrung und Lagerung und/oder als Schutzverpackung gegen externe Einflüsse verwendet werden.

## Patentansprüche

1. Verpackung, umfassend
- eine innere Kammer aus einem elastischen Material zum Umschließen des Verpackungsinhalts, der im Innenraum der inneren Kammer eingesetzt ist; und
- eine äußere Kammer aus einem elastischen Material zum Umschließen der inneren Kammer, die den Verpackungsinhalt umschließt und die in den Innenraum der äußeren Kammer eingesetzt ist;
wobei die innere Kammer durch Absaugung der Umgebungsluft aus der Verpackung mit einer Absaugevorrichtung an den Verpackungsinhalt angelegt ist;
nachfolgend die äußere Kammer durch Absaugung der Umgebungsluft aus der Verpackung mit einer Absaugevorrichtung an die innere Kammer angelegt ist.

2. Verpackung nach Anspruch 1, wobei die äußere Kammer ein Füllmaterial umfasst.

3. Verpackung nach einem der vorhergehenden Ansprüche, wobei die äußere Kammer ein Granulat und/oder Granulat-ähnliches Füllmaterial umfasst.

4. Verpackung nach einem der vorhergehenden Ansprüche, wobei die äußere Kammer ein kompostierbares und/oder recycelbares Füllmaterial umfasst.

5. Verpackung nach einem der vorhergehenden Ansprüche, wobei die äußere Kammer ein Füllmaterial aus nachhaltiger Produktion umfasst.

6. Verpackung nach einem der vorhergehenden Ansprüche, wobei die äußere Kammer ein Füllmaterial aus Baumrinde umfasst.

7. Verpackung nach einem der vorhergehenden Ansprüche, wobei die äußere Kammer in Einzelsegmente unterteilt ist.

8. Verpackung nach einem der vorhergehenden Ansprüche, wobei das Füllmaterial in Einzelsegmenten der äußeren Kammer vorliegt.

9. Verpackung nach einem der vorhergehenden Ansprüche, wobei die innere und/oder äußere Kammer aus einem elastischen Material besteht, das kompostierbar und/oder recycelbar ist.

10. Verpackung nach einem der vorhergehenden Ansprüche, wobei die innere und/oder äußere Kammer aus einem elastischen Material aus nachhaltiger Produktion besteht.

11. Verpackung nach einem der vorhergehenden Ansprüche, wobei der Verpackungsinhalt gleiche Produkte und/oder voneinander unterscheidbare Produkte umfasst.

12. Verwendung einer Verpackung nach einem der Ansprüche 1 bis 11 als Verpackung zum Transport, Verpackung zur Aufbewahrung und Lagerung, Werbe- und/oder Verkaufsverpackung, Versandverpackung, Aromaschutzverpackung, Thermoverpackung, Isolierverpackung, Schutzverpackung gegen mechanische und/oder thermische Einflüsse, Schutzverpackung für Druck-, Stoß- und/oder Kratz-empfindliche Verpackungsinhalte.

13. Verwendung einer Verpackung nach Anspruch 12 als Verpackung für Lebensmittel, Verpackung für Getränke, Verpackung für Blutkonserven und/oder Medikamente, Verpackung für Pharma- und/oder Medizintechnikprodukte.
